# EUROPÄISCHE PATENTSCHRIFT

(11) **EP 3 374 329 B1**
(45) Veröffentlichungstag und Bekanntmachung des Hinweises auf die Patenterteilung: **12.02.2020**
(21) Anmeldenummer: 16795015.3
(22) Anmeldetag: 10.11.2016
(51) Int. Cl.: C04B 35/48, C04B 35/488, C04B 35/119, C04B 35/626

(54) **THERMOSCHOCKRESISTENTE VERBUNDWERKSTOFFE**
THERMAL SHOCK-RESISTANT COMPOSITE MATERIALS
MATÉRIAUX COMPOSITES RÉSISTANTS AUX CHOCS THERMIQUES

(30) Priorität: 10.11.2015 DE 102015222143
(43) Veröffentlichungstag der Anmeldung: 19.09.2018
(73) Patentinhaber: CeramTec GmbH, 73207 Plochingen (DE)
(72) Erfinder: GOTTWIK, Lukas, 73087 Bad Boll (DE); BETZ, Thomas, 92637 Weiden (DE); KLUGE, Claus Peter, 95195 Röslau (DE); KUNTZ, Meinhard, 73733 Esslingen (DE); LENK, Reinhard, 01328 Dresden (DE)
(86) Internationale Anmeldenummer: PCT/EP2016/077298
(87) Internationale Veröffentlichungsnummer: WO 2017/081174

(56) Entgegenhaltungen:
- EP-A1- 2 377 506
- WO-A1-2008/040813
- DE-A1-102013 216 440
- DE-A1-102014 202 256
- TSUKUMA K ET AL: "MECHANICAL PROPERTY AND MICROSTRUCTURE OF TZP AND TZP/AL2O3 COMPOSITES", MATERIALS RESEARCH SOCIETY SYMPOSIUM PROCEEDINGS; [MATERIALS RESEARCH SOCIETY SYMPOSIUM PROCEEDINGS], MATERIALS RESEARCH SOCIETY, PITTSBURG, PA; US, 1. Januar 1987 (1987-01-01), Seiten 123-135, XP008075951, ISBN: 978-1-55899-828-5
- MA Y L ET AL: "Yttria-magnesia partially stabilised zirconia reinforced with MgAl2O4 spinel particles", MATERIALS SCIENCE AND TECHNOLOGY, TAYLOR & FRANCIS, GB, Bd. 14, Nr. 2, 1. Februar 1998 (1998-02-01), Seiten 139-142, XP009188138, ISSN: 0267-0836
- JESSE P. ANGLE ET AL: "Parameters influencing thermal shock resistance and ionic conductivity of 8 mol% yttria-stabilized zirconia (8YSZ) with dispersed second phases of alumina or mullite", JOURNAL OF THE EUROPEAN CERAMIC SOCIETY., Bd. 34, Nr. 16, 1. Dezember 2014 (2014-12-01), Seiten 4327-4336, XP55340208, GB ISSN: 0955-2219, DOI: 10.1016/j.jeurceramsoc.2014.06.020

## Beschreibung

Der erfindungsgemäße Verbundwerkstoff zeichnet sich gegenüber dem Stand der Technik durch eine verbesserte Thermoschockbeständigkeit aus. Überraschenderweise wurde außerdem festgestellt, dass neben einer Festigkeitssteigerung eine gleichbleibende oder sogar größere lonenleitfähigkeit trotz Verringerung der durchschnittlichen Gefügekristallitgröße erreicht werden konnte.

Der erfindungsgemäße Verbundwerkstoff kann zusätzlich infolge seiner ionenleitenden Eigenschaft als Sauerstoffsensor eingesetzt werden. Typisches Anwendungsfeld ist z.B. die Lambdasonde im Automobil- bzw. Elektroniksektor. Hier kann der erfindungsgemäße Verbundwerkstoff in Form von gesinterten Folien als Komponente in der Lambdasonde eingesetzt werden.

Die Zusammensetzung zur Herstellung des erfindungsgemäßen Verbundwerkstoffes, d.h. die Mischung der im Verbundwerkstoff enthaltenen keramiscen Pulver inklusive der möglichen Additive, können vor dem Sintern zu einem Grünkörper geformt werden. Der Verbundwerkstoff kann dann insbesondere als Grünkörper in Form einer Folie vorliegen, welche beispielsweise oder insbesondere durch Foliengießen entstanden ist. Die Dicke der Folie ist abhängig vom Einsatzgebiet und liegt zwischen 10 µm und 1 mm, bevorzugt zwischen 100 µm und 600 µm.

Die Erfindung betrifft einen Verbundwerkstoff gemäß Anspruch 1 und dessen Verwendung gemäß Anspruch 10.

Die Erfindung betrifft in einer bevorzugten Ausführungsform einen Verbundwerkstoff, umfassend eine keramische Matrix aus Zirkonoxid und darin dispergiert zumindest eine Sekundärphase, dadurch gekennzeichnet, dass die Matrix aus Zirkonoxid einen Anteil von höchstens 99 Gew.-% am Verbundwerkstoff ausmacht, und dass die Sekundärphase einen Anteil von 1 bis 30 Gew.-%, bevorzugt 1 - 15 Gew.-%, besonders bevorzugt 1 - 5 Gew.-% am Verbundwerkstoff ausmacht, wobei das Zirkonoxid, bezogen auf den Gesamtzirkonoxid-Anteil im Wesentlichen, vorzugsweise zu 90 bis 99 %, bevorzugt zu 95 bis 99 % und besonders bevorzugt zu 98 bis 99% in der tetragonalen und kubischen Phase vorliegt, und wobei die tetragonale und kubische Phase des Zirkonoxids chemisch und/oder mechanisch stabilisiert ist.

Mechanische Stabilisierung ist dabei so zu verstehen, dass die erfindungsgemäße Zugabe der Sekundärphasen die bei der Umwandlung der tetragonalen Kristallstruktur in die monokline Kristallstruktur des Zirkonoxids auftretende Dehnung ausgleicht, indem Mikrobewegungen/-scherungen auf Kristallit-Ebene in einem ansonsten vergleichsweise starren keramischen Gefüge möglich werden, ohne dass notwendig makroskopische Risse entstehen.

Weiterhin wird unter mechanischer Stabilisierung auch verstanden, dass die tetragonale Kristallphase des Zirkonoxids durch mechanische Spannungen im Gesamtgefüge stabilisiert wird. Unterschiedliche Wärmeausdehnungskoeffizienten von ZrO2 und Sekundärphase beim Abkühlen nach dem Sinterprozess können zu solchen Spannungen führen. Erfindungsgemäß kann die Matrix aus Zirkonoxid im Verbundwerkstoff eine Gefügekorngröße von durchschnittlich 0,5 bis 2,0 µm, bevorzugt von durchschnittlich 0,5 bis 1,5 µm aufweisen. Die Gefügekorngröße wird dabei als "mean linear intercept distance" mittels des Linienschnittverfahrens nach EN 623-3 (2003-01) bestimmt.

Der erfindungsgemäße Verbundwerkstoff enthält einen oder mehrere chemische Stabilisatoren. Die chemischen Stabilisatoren sind dabei ausgewählt aus der Gruppe, bestehend aus MgO, CaO, CeO₂, Gd₂O₃, Sm₂O₃, Er₂O₃, Y₂O₃ , Yb₂O₃ oder Sc₂O₃ oder Mischungen daraus, wobei der Gesamtgehalt an chemischen Stabilisatoren < 12 Mol-%, bevorzugt < 10 Mol-%, besonders bevorzugt < 5 Mol-% bezogen auf den Zirkonoxidgehalt ist.

Der erfindungsgemäße Verbundwerkstoff kann weitere Bestandteile enthalten, insbesondere das Zirkonoxid und/oder die Sekundärphase können lösliche Bestandteile enthalten. Lösliche Bestandteile können z.B. Cr, Fe, Mg, Ca, Ti, Si, Y, Ce, Lanthanoide und/oder V sein. Diese Bestandteile können zum einen als Farbadditive und zum anderen als Sinterhilfsmittel fungieren. Sie werden in der Regel als Oxide zugegeben.

Die Sekundärphase des erfindungsgemäßen Verbundwerkstoffes kann auch Dispersoide umfassen, die infolge ihrer Kristallstruktur Scherdeformationen auf mikroskopischer Ebene ermöglichen und/oder die mechanischen Eigenschaften verbessern.

Die Gefügekorngröße der Sekundärphase sind dabei kleiner oder gleich der Gefügekorngröße des Zirkonoxids sind, wobei die Gefügekorngrößen (d50) vorzugsweise 0,1 bis 2,0 µm, bevorzugt 0,1 bis 1,5 µm, besonders bevorzugt 0,1 bis 0,5 µm betragen. Die Gefügekorngrößen können ebenfalls mit dem Linienschnittverfahren bestimmt werden.

Die Sekundärphase ist dabei insbesondere eine oder mehrere der folgenden Verbindungen ausgewählt aus der Gruppe, bestehend aus Strontiumaluminat (SrAl₂O₄ oder SrAl₁₂O₁₉), Lanthanaluminat (LaAlO₃ oder LaAl₁₁O₁₈), Spinell (MgAl₂O₄), Aluminiumoxid (Al₂O₃), Kaliumfeldspat (KAlSi₃O₈) und Lanthanphoshat (La(PO)₄), bevorzugt Strontiumaluminat, Aluminiumoxid und Zirkonsilikat, besonders bevorzugt Zirkonsilikat.

In einer besonders bevorzugten Ausführungsform kann der erfindungsgemäße Werkstoff auch eine Drittphase aufweisen. Dies kann aus den bereits für die Sekundärphase genannten Verbindungen ausgewählt sein.

Erfindungsgemäß kann der Verbundwerkstoff durch verschiedenste Verfahren hergestellt werden, bevorzugt über Foliengießen, Extrudieren, Trockenpressen Additiv Manufacturing Methoden und / oder andere Formgebungsverfahren wie beispielsweise Schlickerguß oder Spritzguß.

Um den Verbundwerkstoff zu erhalten, wird die Rohstoffmischung nachfolgend gesintert, wobei die Sinterung bei Temperaturen <1670 °C, bevorzugt < 1530 °C, besonders bevorzugt < 1400 °C erfolgt.

Der erfindungsgemäße Verbundwerkstoff zeigt sich deutlich verbessert in seinen charakteristischen Eigenschaften. Insbesondere weist der Verbundwerkstoff bevorzugt eine Vierpunktbiegebruchfestigkeit ≥ 600 MPa nach DIN EN 843-1 (Fassung EN 843-1: 2006 / Ausgabe 08-2008) auf.

Ein Merkmal zur Bewertung von Hochleistungskeramiken ist die "Schädigungstoleranz". Der Test erfolgt in Anlehnung an die in der Literatur gut beschriebene "Indentation Strength Method", siehe R.F. Cook, Multi-Scale Effects in the Strength of Ceramics, J.Am.Ceram.Socl. 98 [1] 2933-2947 (2015) und P. Chantikul, G.R. Anstis, B.R. Lawn, D.B. Marshall, A Critical Evaluation of Indentation Techniques for Measuring Fracture Toughness: II Strength Method, J.Am.Ceram.Soc. 64 [9], 539 - 543 (1981).

Die etablierte methodische Vorgehensweise wurde anhand verschiedener Werkstoffe erarbeitet. Dabei hat sich gezeigt, dass dieser Test sehr gut reproduzierbar ist und als aussagefähig bezüglich der technisch relevanten Verstärkungsmechanismen, beispielsweise Umwandlungsverstärkung, angesehen werden kann. Die Trennschärfe bezüglich Werkstoffvarianten ist wesentlich zuverlässiger als beispielsweise Messungen der Risszähigkeit mittels SEVNB-Test.

Beim Test selbst werden jeweils 3 Indentereindrücke mit gleicher Last auf der Zugseite von Biegestäbchen innerhalb der oberen Auflagerrollen eingebracht. Anschließend werden die definiert geschädigten Biegestäbchen in Wasser, mind. 3 Tage (Sättigung des unterkritischen Risswachstums) ausgelagert. Danach wird die Restfestigkeit analog eines normalen Biegeversuchs ermittelt.

Die Schädigungstoleranz bzw. Restfestigkeit des erfindungsgemäßen Verbunddwerkstoffes nach HV5-Eindruck beträgt > 170 MPa, bevorzugt > 190 MPa und insbesondere bevorzugt > 200 MPa. Die Schädigungstoleranz bzw. Restfestigkeit des erfindungsgemäßen Verbunddwerkstoffes nach HV20-Eindruck beträgt > 100 MPa, bevorzugt > 110 MPa und insbesondere bevorzugt > 120 MPa.

Außerdem weist der erfindungsgemäße Verbundwerkstoff eine elektrische Leitfähigkeit bei 850°C von ≥ 2,0 S/m und bei 1000°C von ≥ 5,0 S/m, bei 1000°C vorzugsweise ≥ 6,0 S/m auf.

Die Risseindringprüfung nach einer Thermoschockbehandlung auf Basis vonDIN EN 820-3 (Fassung EN 820-3: 2004 / Ausgabe 11.2004) zeigt bei erfindungsgemäßen Verbundwerkstoffen ein besonders positives Ergebnis im Vergleich zum bekannten Werkstoff aus dem Stand der Technik. Die Thermoschockbeständigkeit wurde durch Abschreckversuche an gefasten Biegestäbchen ermittelt. Bei einer Temperaturdifferenz von 220°C zeigte der erfindungsgemäße Verbundwerkstoff keine Schädigung. Dagegen zeigte der Werkstoff aus dem Stand der Technik Rissbildung infolge thermischer Spannungen.

Der erfindungsgemäße Verbundwerkstoffs wird bevorzugt in der Elektrotechnik bzw. Sensortechnik, insbesondere zur Herstellung von Sauerstoffsensoren, besonders bevorzugt als Vorprodukt bzw. als Komponente der Lambdasonde in Form von ungesinterten ZrO₂-Folien verwendet und ist nach der Herstellung als eine Komponente in einer Lambda Sonde vorhanden.

## Patentansprüche

1. Verbundwerkstoff, umfassend eine keramische Matrix aus Zirkonoxid und darin dispergiert zumindest eine Sekundärphase, wobei die Matrix aus Zirkonoxid mit einen Anteil von höchstens 99 Gew.-% und die Sekundärphase mit einen Anteil von 1 bis 30 Gew.-% im Verbundwerkstoff vorliegt, wobei das Zirkonoxid zu 90 bis 99 % in der tetragonalen und kubischen Phase vorliegt (bezogen auf den Gesamtzirkonoxid-Anteil), und wobei als chemischer Stabilisator MgO, CaO, CeO₂, Gd₂O₃, Sm₂O₃, Er₂O₃, Y₂O₃, Yb₂O₃oder Sc₂O₃ oder Mischungen daraus enthalten ist, mit einem Gesamtgehalt an chemischen Stabilisatoren < 12 Mol-% (bezogen auf den Zirkonoxidgehalt), **dadurch gekennzeichnet, dass** das Zirkonoxid eine Gefügekorngröße von durchschnittlich 0,5 bis 2,0 µm aufweist, wobei die Gefügekorngröße der Sekundärphase kleiner oder gleich der Gefügekorngröße des Zirkonoxids ist, und wobei eine Sekundärphase Zirkonsilikat (ZrSiO4) ist.

2. Verbundwerkstoff nach Anspruch 1, **dadurch gekennzeichnet, dass** das Zirkonoxid, bezogen auf den Gesamtzirkonoxid-Anteil zu 95 bis 99 % und bevorzugt zu 98 bis 99% in der tetragonalen und kubischen Phase vorliegt.

3. Verbundwerkstoff nach Anspruch 1 oder 2, **dadurch gekennzeichnet, dass** der Anteil an Sekundärphase 1 - 15 Gew.-%, bevorzugt 1- 5 Gew.-% am Verbundwerkstoff beträgt.

4. Verbundwerkstoff nach einem der vorstehenden Ansprüche, **dadurch gekennzeichnet, dass** der Verbundwerkstoff als Grünkörper die Form einer Folie mit einer Dicke von 10 µm - 1mm aufweist.

5. Verbundwerkstoff nach einem der vorstehenden Ansprüche, **dadurch gekennzeichnet, dass** die Dicke der Folie 100µm-600µm beträgt.

6. Verbundwerkstoff nach einem der vorstehenden Ansprüche, **dadurch gekennzeichnet, dass** das Zirkonoxid eine Gefügekorngröße von durchschnittlich 0,5 bis 1,5 µm aufweist.

7. Verbundwerkstoff nach einem der vorstehenden Ansprüche, **dadurch gekennzeichnet, dass** die Gefügekorngröße der Sekundärphase 0,1 bis 2,0 µm, bevorzugt 0,1 bis 1,5 µm, besonders bevorzugt 0,1 bis 0,5 µm beträgt.

8. Verbundwerkstoff nach einem der vorstehenden Ansprüche, **dadurch gekennzeichnet, dass** der Gesamtgehalt an chemischen Stabilisatoren < 10 Mol-%, bevorzugt < 5 Mol-% bezogen auf den Zirkonoxidgehalt beträgt.

9. Verbundwerkstoff nach einem der vorstehenden Ansprüche, **dadurch gekennzeichnet, dass** mindestens eine weitere Sekundärphase ausgewählt ist aus der Gruppe, bestehend aus Strontiumaluminat (SrAl₂O₄ oder SrAl₂O₉), Lanthanaluminat (LaAlO₃ oder LaAl-nO-is), Spinell (MgAl₂O₄) , Aluminiumoxid (Al₂O₃), Kaliumfeldspat (KAlSi₃O₈) und Lanthanphoshat (La(PO)₄), bevorzugt Strontiumaluminat (SrAl₂O₄ oder SrAl₂O₉) oder Aluminiumoxid (Al₂O₃).

10. Verwendung eines Verbundwerkstoffs gemäß einem der Ansprüche 1 bis 9, in der Elektrotechnik bzw. Sensortechnik,

11. Verwendung nach Anspruch 10 zur Herstellung von Sauerstoffsensoren, bevorzugt Lambdasonden.

## Claims

1. Composite material comprising a zirconia ceramic matrix and at least one secondary phase dispersed therein, the zirconia matrix being present in the composite material in a proportion of at most 99 wt.% and the secondary phase being present in a proportion of from 1 to 30 wt.%, with 90 to 99% of the zirconia being present in the tetragonal and cubic phase (based on the total zirconia proportion), and MgO, CaO, CeO₂, Gd₂O₃, Sm₂O₃, Er₂O₃, Y₂O₃, Yb₂O₃ or Sc₂O₃ or mixtures thereof being contained as a chemical stabilizer, with a total content of chemical stabilizers of <12 mol% (based on the zirconia content), **characterized in that** the zirconia has a microstructure grain size of on average 0.5 to 2.0 µm, the microstructure grain size of the secondary phase being less than or equal to the microstructure grain size of the zirconia, and a secondary phase being zirconium silicate (ZrSiO4).

2. Composite material according to claim 1, **characterized in that**, based on the total zirconia proportion, 95 to 99% of the zirconia, and preferably 98 to 99%, is present in the tetragonal and cubic phase.

3. Composite material according to either claim 1 or claim 2, **characterized in that** the proportion of the secondary phase is 1-15 wt.%, preferably 1-5 wt.% of the composite material.

4. Composite material according to any of the preceding claims, **characterized in that** the composite material, as a green body, is in the form of a film having a thickness of from 10 µm - 1mm.

5. Composite material according to any of the preceding claims, **characterized in that** the thickness of the film is from 100 µm - 600 µm.

6. Composite material according to any of the preceding claims, **characterized in that** the zirconia has a microstructure grain size of on average 0.5 to 1.5 µm.

7. Composite material according to any of the preceding claims, **characterized in that** the microstructure grain size of the secondary phase is 0.1 to 2.0 µm, preferably 0.1 to 1.5 µm, particularly preferably 0.1 to 0.5 µm.

8. Composite material according to any of the preceding claims, **characterized in that** the total content of chemical stabilizers is <10 mol%, preferably <5 mol%, based on the zirconia content.

9. Composite material according to any of the preceding claims, **characterized in that** at least one further secondary phase is selected from the group consisting of strontium aluminate (SrAl₂O₄ or SrAl₂O₉), lanthanum aluminate (LaAlO₃ or LaAI-nO-is), spinel (MgAl₂O₄), alumina (Al₂O₃), potassium feldspar (KAlSi₃O₈) and lanthanum phosphate (La(PO)₄), preferably strontium aluminate (SrAl₂O₄ or SrAl₂O₉) or alumina (Al₂O₃).

10. Use of a composite material according to any of claims 1 to 9 in electrical or sensor technology.

11. Use according to claim 10 for producing oxygen sensors, preferably lambda sensors.

## Revendications

1. Matériau composite comprenant une matrice céramique en oxyde de zirconium et au moins une phase secondaire dispersée dans celle-ci, dans lequel la matrice en oxyde de zirconium est présente en une proportion d'au plus 99 % en poids et la phase secondaire est présente en une proportion de 1 à 30 % en poids dans le matériau composite, dans lequel l'oxyde de zirconium est présent en une proportion de 90 à 99 % dans les phases tétragonale et cubique (par rapport à la proportion totale de zirconium), et dans lequel MgO, CaO, CeO₂, Gd₂O₃, Sm₂O₃, Er₂O₃, Y₂O₃, Yb₂O₃ ou Sc₂O3 ou des mélanges de ceux-ci sont présents comme stabilisateurs chimiques, ayant une teneur totale en stabilisants chimiques < 12 % en moles (par rapport à la teneur en oxyde de zirconium), **caractérisé en ce que** l'oxyde de zirconium présente une granulométrie structurale moyenne de 0,5 à 2,0 µm, dans lequel la granulométrie structurale de la phase secondaire est inférieure ou égale à celle de l'oxyde de zirconium, et dans lequel une phase secondaire est du silicate de zirconium (ZrSiO₄).

2. Matériau composite selon la revendication 1, **caractérisé en ce que** l'oxyde de zirconium, par rapport à la proportion totale de l'oxyde de zirconium, est présent en une proportion de 95 à 99 % et de préférence de 98 à 99 % dans la phase tétragonale et cubique.

3. Matériau composite selon la revendication 1 ou 2, **caractérisé en ce que** la proportion de phase secondaire est de 1 à 15 % en poids, de préférence de 1 à 5 % en poids du matériau composite.

4. Matériau composite selon l'une des revendications précédentes, **caractérisé en ce que** le matériau composite comporte comme corps cru la forme d'un film d'une épaisseur de 10 µm à 1 mm.

5. Matériau composite selon l'une des revendications précédentes, **caractérisé en ce que** l'épaisseur du film est de 100 à 600 µm.

6. Matériau composite selon l'une des revendications précédentes, **caractérisé en ce que** l'oxyde de zirconium présente une granulométrie structurale moyenne de 0,5 à 1,5 µm.

7. Matériau composite selon l'une des revendications précédentes, **caractérisé en ce que** la granulométrie structurale de la phase secondaire est de 0,1 à 2,0 microns, de préférence de 0,1 à 1,5 microns, de manière particulièrement préférée de 0,1 à 0,5 microns.

8. Matériau composite selon l'une des revendications précédentes, **caractérisé en ce que** la teneur totale en stabilisants chimiques est < 10 % en moles, de préférence < 5 % en moles, par rapport à la teneur en oxyde de zirconium.

9. Matériau composite selon l'une des revendications précédentes, **caractérisé en ce qu'**au moins une autre phase secondaire est choisie dans le groupe constitué de l'aluminate de strontium (SrAl₂O₄ ou SrAl₂O₉), de l'aluminate de lanthane (LaAlO₃ ou LaAl-nO-is), du spinelle (MgAl₂O₄), de l'oxyde d'aluminium (Al₂O₃), du feldspath de potassium (KAlSi₃O₈) et du phosphate de lanthane (La(PO)₄), de préférence l'aluminate de strontium (SrAl₂O₄ ou SrAl₂O₉) ou l'oxyde d'aluminium (Al₂O₃).

10. Utilisation d'un matériau composite selon l'une des revendications 1 à 9, dans la technologie électrique ou de capteurs.

11. Utilisation selon la revendication 10 pour la réalisation de capteurs d'oxygène, de préférence de sondes lambda.
